# DEMANDE DE BREVET EUROPEEN

(11) **EP 1 211 599 A1**
(43) Date de publication de la demande: **05.06.2002**
(21) Numéro de dépôt: 01125750.8
(22) Date de dépôt: 29.10.2001
(51) Int. Cl.: G06F 9/46, G06F 11/267

(54) **Microprocesseur comprenant des moyens de sauvegarde de données contextuelles lors d'un basculement dans un programme de test**

(30) Priorité: 29.11.2000 FR 0015390
(71) Demandeur: STMicroelectronics, 92120 Montrouge (FR)
(72) Inventeur: Roche, Franck, 13530 Trets (FR); Bouquier, Thierry, 92400 Courbevoie (FR)
(74) Mandataire: Marchand, André

(57) **Abrégé**

La présente invention concerne un microprocesseur (MP2) comprenant des moyens (CMPT, DEC, TMEM) de basculement dans un programme de test (TST-PGR) et des moyens (CPU) pour sauvegarder des données contextuelles (CC₀, A₀, X₀, PCh₀, PCl₀) dans une pile (STK) du microprocesseur lors d'un basculement dans le programme de test. Selon l'invention, le microprocesseur comprend des moyens (CPU) pour délivrer sur un port d'entrée/sortie (IO1), au commencement d'une session de test, des données contextuelles (CC₀, A₀) présentes dans la pile, en commençant par le sommet de la pile, et pour décrémenter un pointeur de pile (SP) d'une valeur correspondant au nombre de données contextuelles délivrées. Avantage : libération d'espace mémoire dans la pile (STK) pour le programme de test.

## Description

La présente invention concerne les microprocesseurs et plus particulièrement les microprocesseurs équipés de moyens de basculement dans un programme de test.

La présente invention concerne également un procédé de gestion de l'espace mémoire d'un microprocesseur après basculement du microprocesseur dans un programme de test et enregistrement de données contextuelles dans une pile.

Il est classique de prévoir, dans la mémoire d'un microprocesseur, un programme de test permettant de prendre le contrôle du microprocesseur par l'intermédiaire d'un équipement externe comme une station de test, afin de vérifier le fonctionnement du microprocesseur et/ou déboguer un programme application en cours de développement.

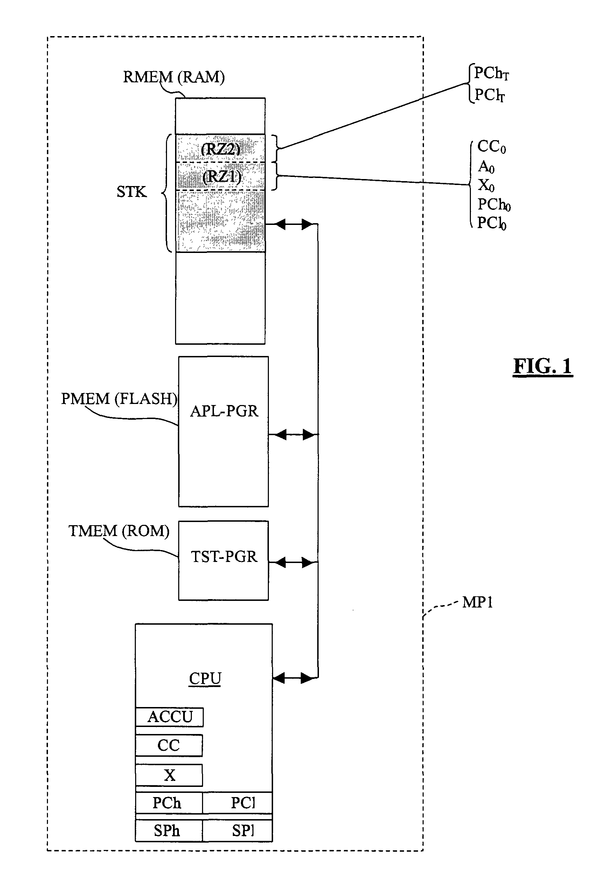

Pour fixer les idées, la figure 1 représente schématiquement un microprocesseur MP1 comprenant une unité centrale de traitement CPU, une mémoire programme rémanente PMEM, une mémoire de test TMEM et une mémoire vive RMEM. Les mémoires PMEM, TMEM et RMEM sont par exemple des mémoires de type FLASH, ROM et RAM, respectivement. La mémoire TMEM reçoit un programme de test TST-PGR prévu par le constructeur et la mémoire PMEM reçoit un programme application APL-PGR développé par l'utilisateur. La mémoire RAM, prévue pour stocker des données temporaires, reçoit la pile STK du microprocesseur. Celle-ci occupe un emplacement non extensible délimité par une adresse basse et une adresse haute qui sont mentionnées dans les spécifications fournies par le constructeur.

L'unité CPU comprend divers registres dont le contenu définit le "contexte" du programme application en cours d'exécution, notamment :
- un registre accumulateur ACCU,
- un registre de codes condition CC comprenant divers drapeaux comme le drapeau Z (zéro), le drapeau N (négatif), le drapeau C ("Carry" ou report de somme), le drapeau H ("Half-Carry" ou demi-report de somme), le drapeau I ("Interrupt Mask" ou masque d'interruption),...
- un registre index X, pour l'adressage indexé du plan mémoire ou l'adressage de registres,
- un compteur de programme PC contenant l'adresse de l'instruction en cours d'exécution, constitué généralement par un registre de poids fort PCh et un registre de poids faible PCl, et
- un pointeur de pile SP (ou registre d'indexation de pile) constitué généralement par un registre de poids fort SPh et un registre de poids faible SP1 et contenant l'adresse du sommet de la pile STK (c'est-à-dire l'adresse du premier emplacement libre de la pile).

Lorsque le microprocesseur bascule dans le programme de test alors qu'il exécute le programme application, les données contextuelles du programme application sont sauvegardées dans la pile STK afin d'être restaurées au terme de la session de test.

Une première zone mémoire RZ1 doit ainsi être réservée dans la pile STK pour la sauvegarde du contexte. Cette zone est destinée à recevoir la valeur courante A₀ de l'accumulateur, la valeur courante CC₀ du registre de codes condition, la valeur courante X₀ du registre d'index, et les octets de poids fort PCh₀ et de poids faible PCl₀ du compteur de programme PC.

D'autre part, lorsque le microprocesseur a basculé en mode test, le programme de test TST-PGR doit lui-même disposer d'une zone disponible dans la pile pour l'enregistrement de données lors de l'exécution de certaines instructions. Ces données sont par exemple deux octets PCh_{T}, PCl_{T} formant la valeur de retour du compteur de programme PC lors de l'exécution d'instructions de saut (JUMP) ou de branchement (CALL).

Ainsi, une seconde zone mémoire RZ2 doit être réservée dans la pile STK pour l'enregistrement de ces données.

En définitive, l'espace mémoire à réserver dans la pile STK d'un tel microprocesseur en prévision d'un basculement dans le programme de test comprend la zone RZ1 et la zone RZ2. L'emplacement de cet espace mémoire n'est pas défini et dépend du taux de remplissage de la pile lors du basculement. En pratique, l'utilisateur qui développe une application doit faire en sorte que le programme application ne remplisse jamais complètement la pile, et laisse au moins au sommet de la pile un emplacement libre correspondant aux deux zones susmentionnées.

Pour l'utilisateur, qui souhaite exploiter au mieux les ressources du microprocesseur lors du développement d'un programme application, les zones RZ1, RZ2 à réserver dans la pile STK constituent un espace mémoire inutilisable et par conséquent un gaspillage des ressources du microprocesseur. Les zones RZ1, RZ2 ne représentant toutefois qu'un nombre réduit d'octets, ceci ne représente un réel inconvénient qu'avec les microprocesseurs à faible prix de revient qui comportent un espace mémoire réduit et une pile de taille limitée. Or, la plupart des microprocesseurs utilisés dans les domaines de la domotique et de l'automobile sont des microprocesseurs à faible prix de revient du type précité.

La présente invention vise à pallier cet inconvénient.

Plus particulièrement, un objectif de la présente invention est de prévoir un microprocesseur qui ne nécessite pas la réservation, dans la pile du microprocesseur, de la zone RZ2 devant être utilisée par le programme de test.

Cet objectif est atteint par la prévision d'un microprocesseur comprenant des moyens de basculement dans un programme de test, des moyens pour sauvegarder des données contextuelles dans une pile du microprocesseur lors d'un basculement dans le programme de test, et des moyens pour délivrer sur un port d'entrée/sortie du microprocesseur, au commencement d'une session de test, des données contextuelles présentes dans la pile, en commençant par le sommet de la pile, et pour décrémenter un pointeur de pile d'une valeur correspondant au nombre de données contextuelles délivrées.

Selon un mode de réalisation, le microprocesseur comprend des moyens pour délivrer en outre sur le port d'entrée/sortie, au commencement d'une session de test, des données présentes dans une mémoire vive du microprocesseur.

Selon un mode de réalisation, le microprocesseur comprend des moyens pour délivrer en outre sur le port d'entrée/sortie, au commencement d'une session de test, le contenu d'au moins un registre susceptible d'être modifié pendant une session de test.

Selon un mode de réalisation, le microprocesseur comprend des moyens pour exécuter une commande de restauration de contexte, l'exécution de la commande de restauration comprenant la récupération, par l'intermédiaire d'un port d'entrée/sortie, des données contextuelles extraites de la pile au commencement d'une session de test, l'enregistrement de ces données dans la pile et l'incrémentation du pointeur de pile d'une valeur correspondant au nombre de données contextuelles récupérées.

Selon un mode de réalisation, les moyens pour exécuter une commande de restauration de la pile sont également agencés pour récupérer d'autres données extraites du microprocesseur après le basculement dans le programme de test, et enregistrer ces données à leurs emplacements initiaux.

La présente invention concerne également un procédé de gestion de l'espace mémoire d'un microprocesseur après basculement du microprocesseur dans un programme de test et enregistrement de données contextuelles dans une pile du microprocesseur, comprenant une étape consistant à délivrer sur un port d'entrée/sortie du microprocesseur des données contextuelles présentes dans la pile, en commençant par le sommet de la pile, une étape de stockage de ces données dans un équipement externe, et une étape de décrémentation du pointeur de pile d'une valeur correspondant au nombre de données contextuelles délivrées sur le port.

Selon un mode de réalisation, le procédé comprend également une étape consistant à délivrer sur le port d'entrée/sortie et à stocker dans l'équipement externe des données présentes dans une mémoire vive du microprocesseur.

Selon un mode de réalisation, le procédé comprend également une étape consistant à délivrer sur le port d'entrée/sortie et à stocker dans l'équipement externe le contenu d'au moins un registre susceptible d'être modifié pendant une session de test.

Selon un mode de réalisation, le procédé comprend une étape de restauration de contexte lorsque le microprocesseur quitte le programme de test, l'étape de restauration comprenant la récupération, par l'intermédiaire d'un port d'entrée/sortie, de données contextuelles extraites de la pile lors du basculement dans le programme de test, l'enregistrement de ces données dans la pile et l'incrémentation du pointeur de pile d'une valeur correspondant au nombre de données contextuelles récupérées.

Selon un mode de réalisation, l'étape de restauration comprend également la récupération d'autres données extraites du microprocesseur après le basculement dans le programme de test, et l'enregistrement de ces données à leurs emplacements initiaux.

Ces objets, caractéristiques et avantages ainsi que d'autres de la présente invention seront exposés plus en détail dans la description suivante du procédé de l'invention et d'un microprocesseur selon l'invention, faite à titre non limitatif en relation avec les figures jointes parmi lesquelles :
- la figure 1 précédemment décrite représente schématiquement l'architecture d'un microprocesseur classique et illustre le problème que cherche à résoudre l'invention,
- la figure 2 représente schématiquement un microprocesseur selon l'invention connecté à une station de test et illustre la mise en oeuvre du procédé de l'invention,
- la figure 3A illustre une étape du procédé de l'invention intervenant au commencement d'une session de test,
- la figure 3B représente une opération de manipulation de la pile du microprocesseur pendant le déroulement d'une session de test, et
- la figure 3C illustre une étape du procédé de l'invention intervenant à la fin d'une session de test.

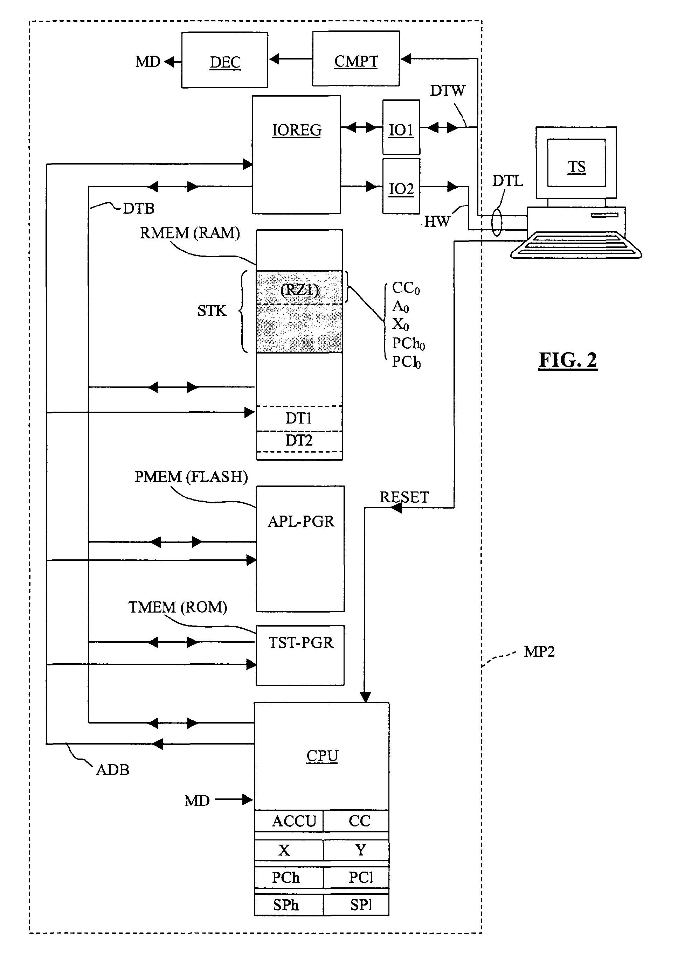

La figure 2 représente un microprocesseur MP2 selon l'invention. Le microprocesseur comprend classiquement une unité centrale de traitement CPU, une mémoire de test TMEM (ROM) contenant un programme de test TST-PGR, une mémoire programme PMEM (FLASH) recevant un programme application APL-PGR, une mémoire vive RAM contenant la pile STK du microprocesseur, et une banque de registre IOREG connectée à des ports d'entrée/sortie IO1, IO2. Ces divers éléments sont connectés à un bus de données DTB ainsi qu'à un bus d'adresse ADB contrôlé par l'unité CPU. L'unité CPU comprend les registres classiques déjà décrits au préambule, notamment un accumulateur ACCU, un registre de codes condition CC, un registre d'index X, un compteur de programme PC comprenant des registres PCh, PCl et un pointeur de pile SP comprenant des registres SPh et SPl. L'unité CPU comprend également ici un deuxième registre d'index Y, présent dans certains modèles de microprocesseurs.

Le microprocesseur MP2 est relié à une station de test TS par l'intermédiaire d'une liaison série DTL. La liaison série DTL comprend ici un fil de données DTW et un fil d'horloge HW connectés respectivement aux ports IO1 et IO2 du microprocesseur. La station de test TS, par exemple un micro-ordinateur, est prévue pour communiquer avec le microprocesseur par l'intermédiaire de la liaison DTL lorsque le microprocesseur bascule dans le programme de test.

Le microprocesseur MP2 se distingue d'un microprocesseur classique par le fait que la zone à réserver dans la pile STK en prévision d'un basculement dans le programme de test ne comprend que la zone RZ1 décrite au préambule, destinée à recevoir les données contextuelles CC₀, A₀, X₀, PCh₀ et PCl₀. En d'autres termes, le microprocesseur MP2 ne nécessite pas la réservation de la zone RZ2 décrite au préambule, permettant notamment au programme de test de sauver des valeurs du compteur de programme PC lors de l'exécution d'instructions de saut ou de branchement.

Selon l'invention, la zone RZ2 est allouée de façon dynamique lors du basculement dans le programme de test, grâce à une séquence de sauvegarde automatique de contexte, ou séquence ACS ("Automatic Context Saving"), qui permet de libérer dans la pile un emplacement utilisable par le programme de test.

Plus particulièrement, après basculement dans le programme de test et chargement des données contextuelles CC₀, A₀, X₀, PCh₀ et PCl₀ dans la pile, l'unité CPU lit les deux données CC₀ ,A₀ se trouvant au sommet de la pile STK, délivre ces données sur le port IO1 par l'intermédiaire de la banque de registre IOREG, puis décrémente le pointeur de pile SP de deux unités afin qu'il pointe sur un nouveau sommet de pile correspondant à l'emplacement de la donnée A0. Les données CC0, A0 sont réceptionnées par la station de test TS et sont conservées en mémoire par cette dernière afin d'être restituées au microprocesseur au terme de la session de test.

Selon un aspect de l'invention, l'unité CPU lit également la donnée Y₀ présente dans le registre Y ainsi que deux données DT1, DT2 se trouvant à des adresses déterminées de la mémoire RAM, et délivre ces données sur le port IO1 après avoir délivré les données CC₀ et A₀. Ces données supplémentaires sont réceptionnées et mémorisées par la station de test, et seront ultérieurement restituées au microprocesseur.

Notons ici que la sauvegarde de la donnée Y₀ permet au programme de test de manipuler le registre Y et que la sauvegarde des données DT1 et DT2 permet au programme de test d'utiliser les deux emplacements mémoire libérés. Cette caractéristique de l'invention, qui s'ajoute à celle consistant à extraire des données contextuelles présentes dans la pile, peut être considérée comme optionnelle et dépend de la structure du programme de test.

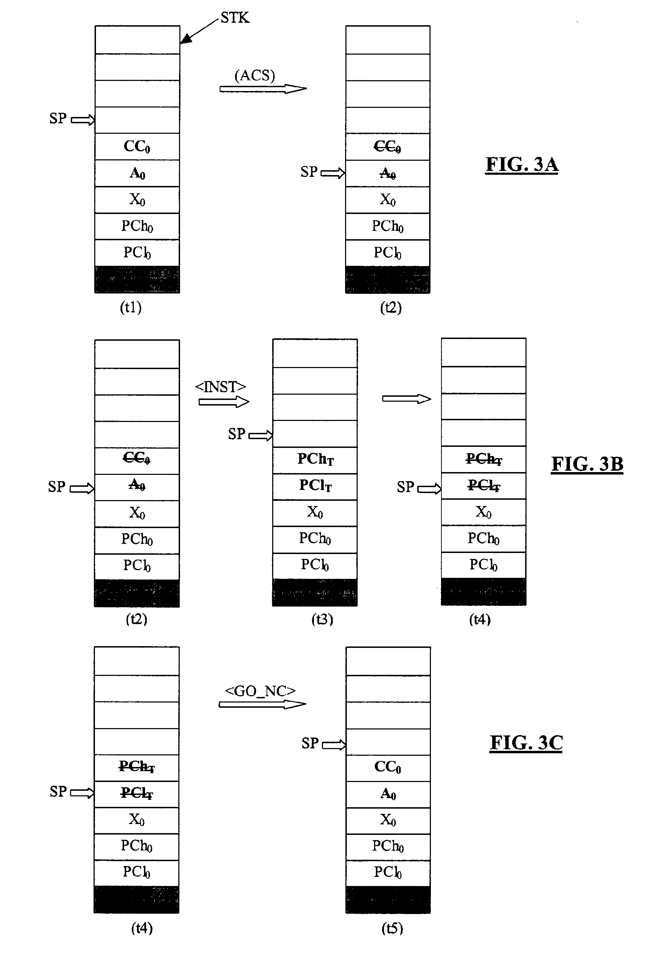

La figure 3A illustre l'effet de la séquence ACS sur la pile STK. A l'instant t1, le microprocesseur a basculé dans le programme de test et la pile contient les cinq octets CC₀, A₀, X₀, PCh₀, PCl₀ définissant le contexte du programme application lors du basculement. A l'instant t2, l'unité CPU a décrémenté le pointeur de pile SP de deux unités après avoir lu et délivré les données CC₀ et A₀ à la station de test. Ainsi, le pointeur SP désigne l'ancien emplacement de la donnée A₀ qui représente maintenant le sommet de la pile. Les données CC₀ et A₀, bien qu'encore présentes dans la mémoire RAM, ne font plus partie de la pile.

Ainsi, comme illustré en figure 3B, ces données sont écrasées par le programme de test à un instant t3, lors de l'exécution d'une instruction INST, par exemple une instruction de saut (JUMP), qui nécessite d'enregistrer dans la pile la valeur courante PCh_{T}, PCl_{T} du compteur de programme PC. L'opération est accompagnée d'une incrémentation du pointeur de pile SP de deux unités. A un instant t4, le programme de test revient à l'adresse de départ du saut et décrémente le pointeur de pile SP de deux unités.

En complément de ces opérations, l'unité CPU est agencée pour exécuter, avant de quitter la session de test, une commande de restauration de données "GO_NC" ("Go New Context") envoyée par la station de test TS. Cette commande se présente sous la forme d'une suite d'octets, dont le premier est le code de la commande :

| | | | | | |
|---|---|---|---|---|---|
| <GO_NC> | DT2 | DT1 | Y₀ | A₀ | CC₀ |

En réponse à cette commande, l'unité CPU restaure les données DT1, DT2 et la valeur Y₀ du registre Y, enregistre les données contextuelles A₀ et CC₀ dans la pile, puis incrémente le pointeur de pile de deux unités, comme cela est illustré en figure 3C. Ainsi, à un instant t5, la pile se trouve dans le même état que celui qu'elle présentait à l'instant t1. Entre les instants t1 et t5, le programme de test a bénéficié d'un espace disponible dans la pile, sans qu'il ait été nécessaire de réserver la zone RZ2 prévue dans l'art antérieur.

En pratique, le basculement du microprocesseur dans le programme de test peut être obtenu de diverses manières. Le microprocesseur comprend par exemple un compteur CMPT dont l'entrée est reliée au fil de données DTW de la liaison série et dont la sortie délivre une valeur de comptage à l'entrée un décodeur DEC. La sortie du décodeur délivre un signal de mode MD appliqué à l'unité CPU. Pour faire basculer le microprocesseur dans le programme de test, la station TS applique tout d'abord à l'unité CPU un signal de remise à zéro RESET, puis applique sur le fil de données DTW un nombre déterminé d'impulsions électriques. Au terme de cette séquence, le compteur CMPT délivre un nombre N correspondant au nombre d'impulsions reçues. Si le nombre N délivré par le compteur est compris entre deux valeurs prédéterminées N1 et N2, le décodeur DEC délivre à l'unité CPU un signal de mode MD indiquant que le programme de test doit être exécuté. L'unité sauve alors le contexte du programme application dans la pile et se connecte à la mémoire de test, appelée mémoire racine ("boot memory") dans le langage de l'homme de l'art.

Pour déboguer un programme application, le basculement dans le programme de test peut également être provoqué par une interruption qui est émise lorsqu'un évènement déterminé se réalise, par exemple la lecture d'une instruction particulière insérée dans le programme application.

La présente invention est bien entendu susceptible de diverses variantes de réalisation, notamment en ce qui concerne le nombre de données contextuelles extraites de la pile, le nombre de registres sauvegardés dans la station de test, et le nombre d'emplacements libérés dans la mémoire RAM.

## Revendications

1. Microprocesseur (MP2) comprenant des moyens (CMPT, DEC, TMEM) de basculement dans un programme de test (TST-PGR) et des moyens (CPU) pour sauvegarder des données contextuelles (CC₀, A₀, X₀, PCh₀, PCl₀) dans une pile (STK) du microprocesseur lors d'un basculement dans le programme de test, **caractérisé en ce qu'**il comprend des moyens pour délivrer sur un port d'entrée/sortie (IO1) du microprocesseur, au commencement d'une session de test, des données contextuelles (CC₀, A₀) présentes dans la pile (STK), en commençant par le sommet de la pile, et pour décrémenter un pointeur de pile (SP) d'une valeur correspondant au nombre de données contextuelles délivrées.

2. Microprocesseur selon la revendication 1, comprenant des moyens pour délivrer en outre sur le port d'entrée/sortie, au commencement d'une session de test, des données (DT1, DT2) présentes dans une mémoire vive (RAM) du microprocesseur.

3. Microprocesseur selon l'une des revendications 1 et 2, comprenant des moyens pour délivrer en outre sur le port d'entrée/sortie, au commencement d'une session de test, le contenu (Y₀) d'au moins un registre (Y) susceptible d'être modifié pendant une session de test.

4. Microprocesseur selon l'une des revendications 1 à 3, comprenant des moyens pour exécuter une commande de restauration de contexte (<GO_NC>), l'exécution de la commande de restauration comprenant la récupération, par l'intermédiaire d'un port d'entrée/sortie (IO1), des données contextuelles (CC₀, A₀) extraites de la pile au commencement d'une session de test, l'enregistrement de ces données dans la pile et l'incrémentation du pointeur de pile d'une valeur correspondant au nombre de données contextuelles récupérées.

5. Microprocesseur selon la revendication 4, dans lequel les moyens pour exécuter une commande de restauration de la pile sont également agencés pour récupérer d'autres données (DT1, DT2, Y₀) extraites du microprocesseur après le basculement dans le programme de test, et enregistrer ces données à leurs emplacements initiaux.

6. Procédé de gestion de l'espace mémoire d'un microprocesseur après basculement du microprocesseur dans un programme de test (TST-PGR) et enregistrement de données contextuelles (CC₀, A₀, X₀, PCh₀, PCl₀) dans une pile (STK) du microprocesseur, **caractérisé en ce qu'**il comprend :
- une étape consistant à délivrer sur un port d'entrée/sortie (IO1) du microprocesseur des données contextuelles (CC₀, A₀) présentes dans la pile, en commençant par le sommet de la pile,
- une étape de stockage de ces données dans un équipement externe (TS), et
- une étape de décrémentation du pointeur de pile (STK) d'une valeur correspondant au nombre de données contextuelles délivrées sur le port.

7. Procédé selon la revendication 6, comprenant également une étape consistant à délivrer sur le port d'entrée/sortie et à stocker dans l'équipement externe des données (DT1, DT2) présentes dans une mémoire vive (RAM) du microprocesseur.

8. Procédé selon les revendications 6 et 7, comprenant également une étape consistant à délivrer sur le port d'entrée/sortie et à stocker dans l'équipement externe le contenu (Y₀) d'au moins un registre (Y) susceptible d'être modifié pendant une session de test.

9. Procédé selon l'une des revendications 6 à 8, comprenant une étape de restauration de contexte lorsque le microprocesseur quitte le programme de test, l'étape de restauration comprenant la récupération, par l'intermédiaire d'un port d'entrée/sortie (IO1), de données contextuelles extraites de la pile lors du basculement dans le programme de test, l'enregistrement de ces données dans la pile et l'incrémentation du pointeur de pile d'une valeur correspondant au nombre de données contextuelles récupérées.

10. Procédé selon la revendication 9, dans lequel l'étape de restauration comprend également la récupération d'autres données extraites du microprocesseur après le basculement dans le programme de test, et l'enregistrement de ces données à leurs emplacements initiaux.
